# EUROPÄISCHE PATENTSCHRIFT

(11) **EP 4 144 682 B1**
(45) Veröffentlichungstag und Bekanntmachung des Hinweises auf die Patenterteilung: **23.07.2025**
(21) Anmeldenummer: 21195285.8
(22) Anmeldetag: 07.09.2021
(51) Int. Cl.: B66C 13/08, B66C 23/18, B66D 1/04, B66D 1/28, B66D 1/74

(54) **VERFAHREN ZUR MONTAGE ODER DEMONTAGE VON KOMPONENTEN EINER WINDENERGIEANLAGE SOWIE SEILWINDENEINHEIT**
METHOD FOR INSTALLING OR REMOVING COMPONENTS OF A WIND POWER SYSTEM AND CABLE WINCH UNIT
PROCÉDÉ DE MONTAGE OU DE DÉMONTAGE DES COMPOSANTS D'UNE ÉOLIENNE, AINSI QU'UNITÉ DE TREUIL À CÂBLE

(43) Veröffentlichungstag der Anmeldung: 08.03.2023
(73) Patentinhaber: Wobben Properties GmbH, 26607 Aurich (DE)
(72) Erfinder: BIEBL, Herbert, 26624 Südbrookmerland (DE); FREESE, Ewald, 26489 Ochtersum (DE); DRUIVENGA, Cord, 26632 Ihlow (DE)
(74) Vertreter: Eisenführ Speiser

(56) Entgegenhaltungen:
- WO-A1-2020/135907
- US-B1- 7 770 870
- US-B2- 7 111 826
- US-B2- 9 003 992

## Beschreibung

Die vorliegende Erfindung betrifft ein Verfahren zur Montage oder Demontage von Komponenten einer Windenergieanlage und eine Seilwindeneinheit.

Bei der Montage oder Demontage beispielsweise einer Windenergieanlage müssen große Komponenten wie beispielsweise die Rotorblätter oder ein elektrischer Generator der Windenergieanlage mittels eines Krans montiert oder demontiert werden. Hierbei werden typischerweise Halteseile oder Führungsseile verwendet.

WO 2014/202691 A1 zeigt ein Verfahren zur Montage eines Rotorblattes mittels eines Krans und zwei Halteseilen. Während das Rotorblatt mittels des Krans angehoben wird, sind zwei Halteseile an dem Rotorblatt befestigt und dienen dazu, das Rotorblatt zu halten bzw. zu führen, damit das Rotorblatt sich nicht unkontrolliert bewegen kann.

WO 2020/135907 A1 offenbart die Merkmale des Oberbegriffs des Anspruchs 4 und beschreibt eine Seilwindeneinheit, welche bei der Montage oder Demontage einer Windenergieanlage verwendet wird.

US 9,003,992 B2 beschreibt eine Seilwindeneinheit mit einer Basiseinheit und einer Seilwinde nach dem Oberbegriff des Anspruchs 1.

Es ist eine Aufgabe der vorliegenden Erfindung, eine Seilwindeneinheit vorzusehen, welche eine sichere Montage oder Demontage ermöglicht.

Diese Aufgabe wird durch eine Seilwindeneinheit nach Anspruch 1 gelöst.

Somit wird eine Seilwindeneinheit mit einer Basiseinheit, einem Schwenkarm und einer Halteeinheit vorgesehen. Der Schwenkarm ist an seinem ersten Ende schwenkbar mit der Basiseinheit gekoppelt. Der Schwenkarm weist an seinem zweiten freien Ende eine Seilwinde zur Aufnahme eines Halteseils oder Führungsseils auf. Die Halteeinheit ist schwenkbar mit dem Schwenkarm gekoppelt. Die Basiseinheit weist eine Mehrzahl von Rasteinheiten zur Aufnahme eines ersten Endes der Halteeinheit auf.

Gemäß einem Aspekt der vorliegenden Erfindung weist der Schwenkarm einen ersten Abschnitt, der mit der Basiseinheit schwenkbar gekoppelt ist, einen zweiten Abschnitt, an welchen die Seilwinde gekoppelt ist, und einen dritten Abschnitt zwischen dem ersten und zweiten Abschnitt auf. Ein Winkel zwischen der Unterseite des ersten und dritten Abschnitts ist kleiner als 180° und größer als 90°. Ein Winkel zwischen der Unterseite des zweiten Abschnitts und der Unterseite des mittleren Abschnitts ist größer als 180°.

Gemäß einem weiteren Aspekt der vorliegenden Erfindung ist ein Kraftmesser im Bereich des zweiten Abschnitts vorgesehen, um eine Kraft, welche auf das Halteseil oder Führungsseil wirkt, zu erfassen.

Ferner wird ein Verfahren zur Montage oder Demontage von Komponenten einer Windenergieanlage, insbesondere Großkomponenten (z. B. Rotorblatt, Generator), vorgesehen. Die Komponenten der Windenergieanlage werden mittels eines Krans angehoben oder abgesenkt. Zur Sicherung der Komponente wird mindestens ein Halteseil zum einen an der Komponente und zum anderen an einer Seilwindeneinheit gekoppelt. Die Seilwindeneinheit kann optional im Bereich des Bodens oder auf einem Fahrzeug vorgesehen sein. Die Seilwindeneinheit weist ein erstes Ende in Form einer Basiseinheit auf, welche am oder im Boden oder auf einem Fahrzeug befestigbar ist. Die Seilwindeneinheit weist ferner ein zweites Ende in Form eines Schwenkarms auf. Am freien Ende des Schwenkarms ist eine Winde vorgesehen, mittels welcher die Spannung auf dem Halteseil durch Betätigung der Winde beeinflusst werden kann. An dem Schwenkarm ist eine Halteeinheit schwenkbar befestigt. Die Basiseinheit weist eine Mehrzahl von Ausnehmungen zur Aufnahme eines freien Endes der Halteeinheit auf. Durch Auswahl der jeweiligen Rasteinheit kann der Winkel des Schwenkarms eingestellt werden. Optional weist die Windeneinheit einen Kraftmesser zur Kontrolle der am Seil wirkenden Last auf.

Optional weist der Schwenkarm an seinem freien Ende eine Rolleneinheit mit mindestens einer Rolle auf, durch welche ein Seil geführt wird und an der Winde aufwickelbar ist. Dies ist vorteilhaft, weil damit die Winde sich bei einem zu steilen Winkel des Halteseils aufrichten kann. Hierzu wird der Winkel des Schwenkarms verändert. Dabei wird das freie Ende der Halteeinheit aus der derzeitigen Position entfernt und kann sich aufgrund der Schwerkraft in einer neuer Position arretieren.

Optional kann der Schwenkarm zur Verbesserung des Kraftverlaufes mehrere Abschnitte aufweisen, welche nicht gerade verlaufen. Insbesondere kann der Schwenkarm einen ersten und zweiten Abschnitt aufweisen, wobei der erste Abschnitt mit der Basiseinheit schwenkbar gekoppelt ist und der zweite Abschnitt zur Aufnahme der Seilwinde und optional der Rolleneinheit dient.

Zwischen dem ersten und zweiten Abschnitt des Schwenkarms kann ein dritter Abschnitt vorgesehen werden, so dass der erste und zweite Abschnitt nicht in einer Geraden zueinander angeordnet sind. Vielmehr kann ein Winkel zwischen einer Unterseite des ersten Abschnitts und dem dritten Abschnitt einen Winkel < 180° aufweisen. Ferner kann ein Winkel zwischen einer Oberseite des zweiten Abschnitts und dem dritten Abschnitt < 180° betragen.

Gemäß einem Aspekt der vorliegenden Erfindung kann die Basiseinheit zwei Streben aufweisen, welche jeweils über eine Querstrebe miteinander gekoppelt sind. Die Streben können die Rasteinheiten aufweisen.

Gemäß einem Aspekt der vorliegenden Erfindung kann der Schwenkarm zwei Streben aufweisen. Im Bereich des zweiten Abschnitts des Schwenkarms ist eine Winde vorgesehen.

Gemäß einem Aspekt der Erfindung kann die Seilwindeneinheit auf einer Baggermatte installiert sein (diese kann und darf rutschen im Gegensatz z. B. zu Fahrzeug oder Erdnägeln).

Die Erfindung betrifft ebenfalls die Verwendung einer Seilwindeneinheit während der Montage oder Demontage von Komponenten einer Windenergieanlage. Die Seilwindeneinheit weist eine Basiseinheit, einen Schwenkarm und eine Halteeinheit auf. Der Schwenkarm ist an seinem ersten Ende schwenkbar mit der Basiseinheit gekoppelt und weist an seinem zweiten freien Ende eine Seilwinde zur Aufnahme des Haltseils auf. Die Halteeinheit ist schwenkbar mit dem Schwenkarm gekoppelt. Die Basiseinheit weist eine Mehrzahl von Rasteinheiten zur Aufnahme eines ersten Endes der Halteeinheit auf. Die Seilwinde nimmt ein erstes Ende eines Halteseils oder Führungsseils auf, um die zu montierende oder zu demontierende Komponente einer Windenergieanlage während der Montage oder Demontage auszurichten.

Weitere Ausgestaltungen der Erfindung sind Gegenstand der Unteransprüche.

Ausführungsbeispiele und Vorteile der Erfindung werden nachstehend unter Bezugnahme auf die Zeichnung näher erläutert.
- Fig. 1: zeigt eine schematische Darstellung einer Windenergieanlage,
- Fig. 2: zeigt eine schematische Darstellung bei einer Montage eines Rotorblattes einer Windenergieanlage,
- Fig. 3: zeigt eine schematische Darstellung bei einer Montage eines Generators einer Windenergieanlage, und
- Fig. 4A: zeigen jeweils unterschiedliche Darstellungen einer Seilwindeneinheit
- bis 4F: gemäß einem Ausführungsbeispiel der Erfindung.

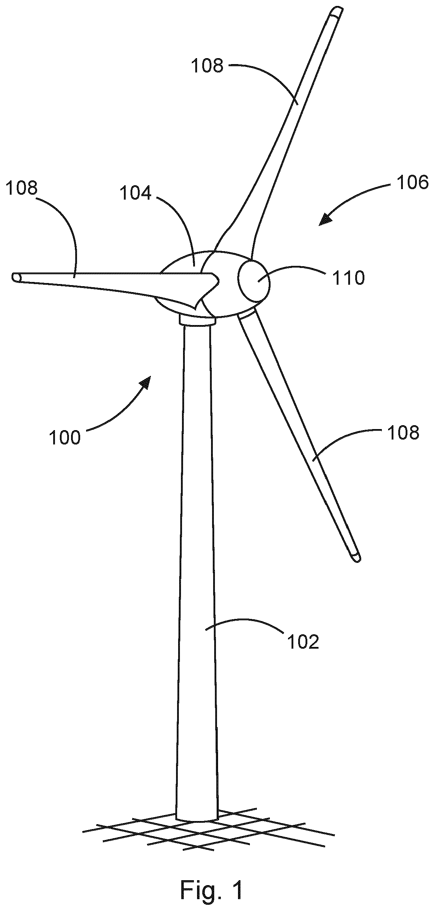

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

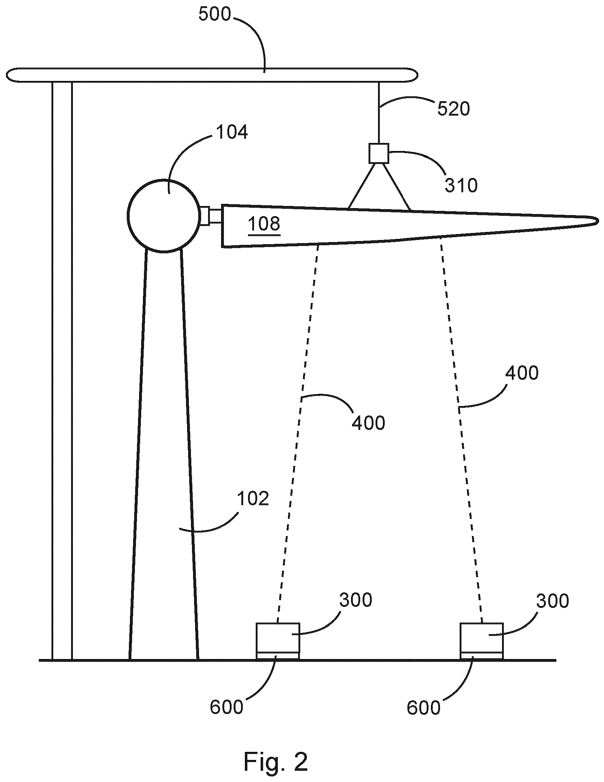

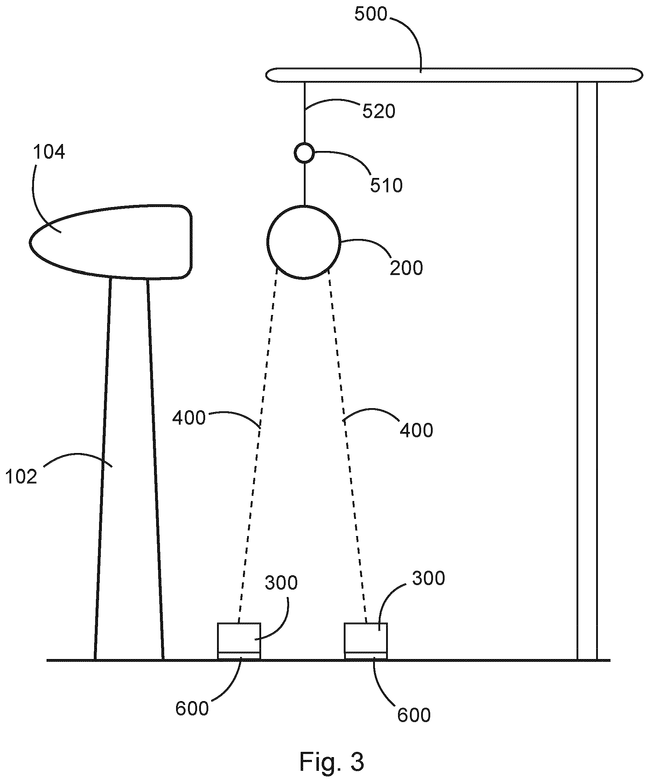

Fig. 2 zeigt eine schematische Darstellung bei einer Montage eines Rotorblattes und Fig. 3 zeigt eine schematische Darstellung bei einer Montage eines Generators einer Windenergieanlage. Mittels eines Krans 500, eines Kranseils 520 und eines Kranhakens 510 kann ein Rotorblatt 108 angehoben werden. Zur Verbesserung der Stabilität der Lage des Rotorblattes 108 werden zwei Halteseile 400 in oder an dem Rotorblatt befestigt. Die Halteseile 400 sind jeweils mit einer Seilwindeneinheit 300 gekoppelt. Mittels der Seilwindeneinheit 300 und den Halteseilen 400 kann das Rotorblatt 108 in der gewünschten Position oder Ausrichtung gehalten werden. Bei Anheben des Rotorblattes 108 mittels des Krans 500 müssen die Seilwindeneinheiten 300 die Länge der Halteseile 400 entsprechend abpassen. Die Seilwindeneinheiten 300 können auf einem Boden oder auf einer Fundamenteinheit 600 platziert sein.

In Fig. 3 wird anstatt eines Rotorblattes ein Generator 200 mittels des Krans 500 angehoben. Auch hier sind zwei Halteseile 400 mit dem Generator 200 gekoppelt. Die anderen Enden der Halteseile 400 sind jeweils mit einer Seilwindeneinheit 300 gekoppelt. Die Seilwindeneinheiten 300 können optional auf einem Fundament 600 platziert sein.

Das Fundament 600 kann beispielsweise in Form von Betongewichten oder Baggermatten ausgestaltet sein.

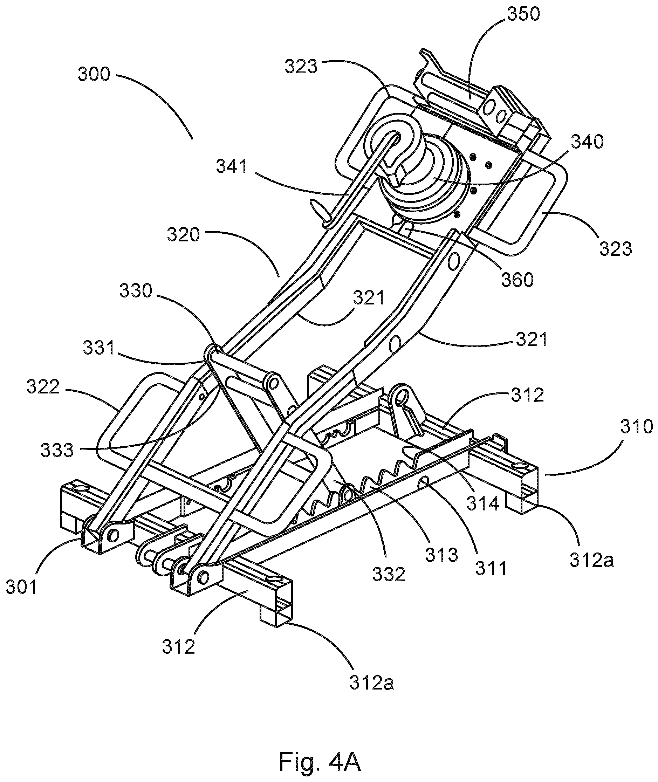

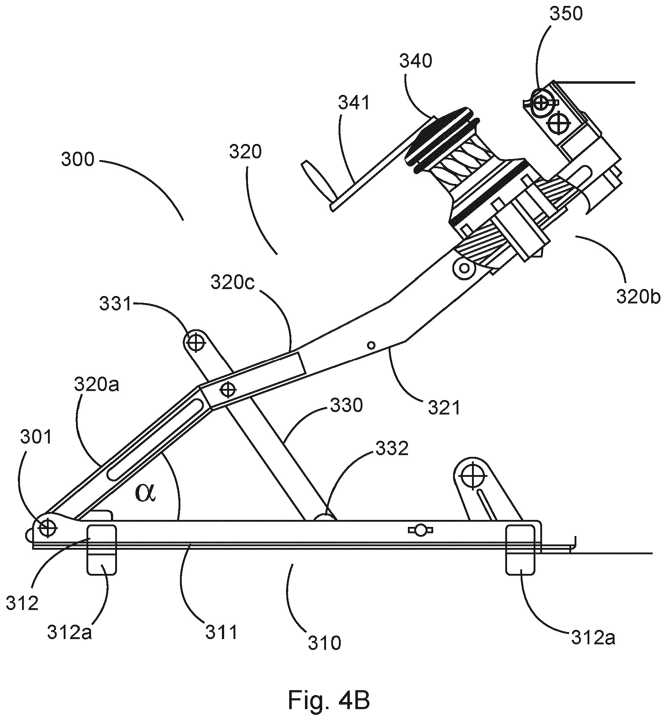

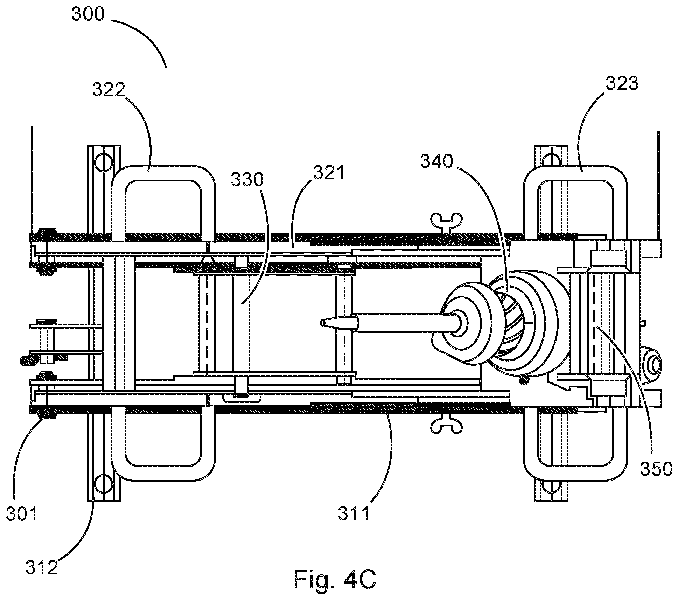

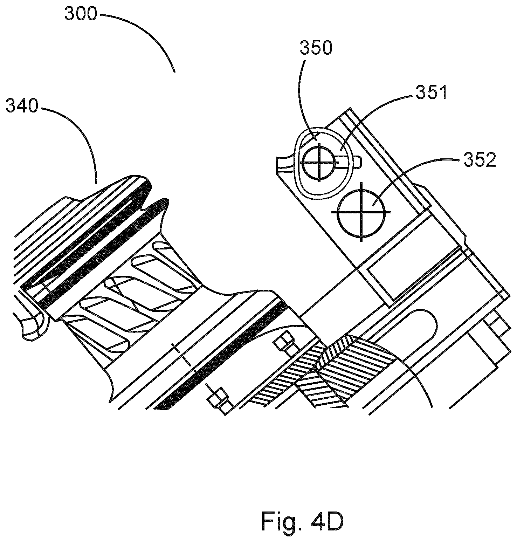

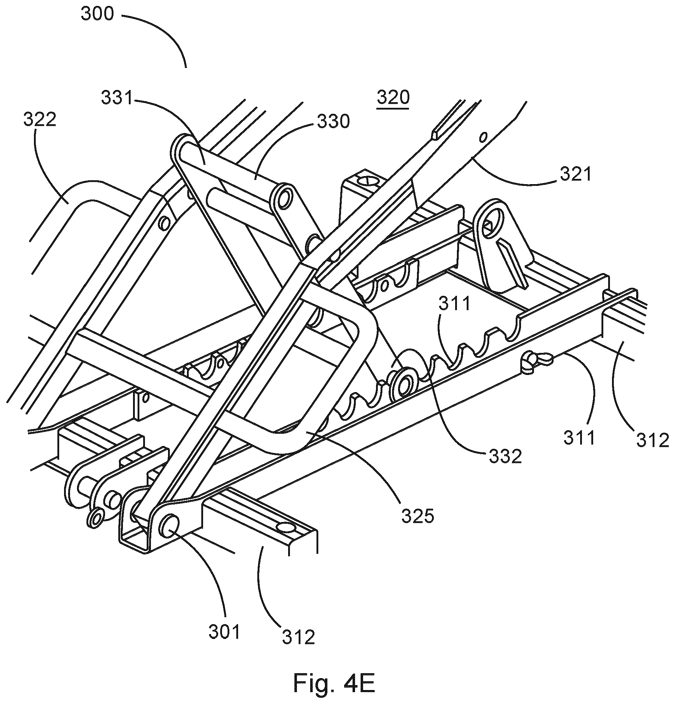

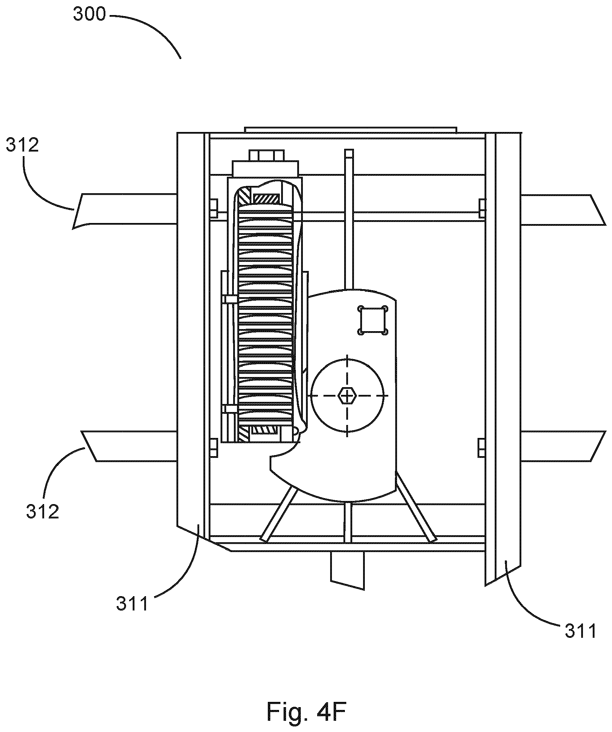

Fig. 4A bis 4F zeigen verschiedene Ansichten einer Seilwindeneinheit gemäß einem Aspekt der vorliegenden Erfindung. In Fig. 4A ist eine perspektivische Ansicht der Seilwindeneinheit gezeigt. In Fig. 4B ist eine Seitenansicht, in Fig. 4C eine Draufsicht, in Fig. 4D eine Detailansicht der Winde und der Rolleneinheit, in Fig. 4E ist eine Detailansicht der Halteeinheit und der Rasteinheiten und in Fig. 4F ist eine Unterseite der Seilwindeneinheit dargestellt. Die Seilwindeneinheit 300 weist eine Basiseinheit 310 und einen Schwenkarm 320 auf. Der Schwenkarm 320 ist über eine Schwenkachse 301 schwenkbar mit der Basiseinheit 310 gekoppelt.

Die Basiseinheit 310 wird dazu verwendet, die Seilwindeneinheit 300 auf einem Boden oder Fundament 600 zu platzieren. Die Basiseinheit 310 kann dann in oder auf dem Fundament 600 lösbar befestigt werden. An dem Schwenkarm 310 ist eine Halteeinheit 330 schwenkbar befestigt. Die Halteeinheit 330 weist ein erstes und zweites Ende 331, 332 auf.

Die Basiseinheit 310 kann zwei Streben 311 sowie zwei Querstreben 312 aufweisen, welche jeweils miteinander verbunden sind. Im Bereich der Streben 311 können Rasteinheiten 313 vorgesehen sein. Das zweite Ende 333 kann dann in die jeweiligen Rasteinheiten 313 einrasten. Die Halteeinheit kann über eine Schwenkachse 333 schwenkbar an dem Schwenkarm 320 vorgesehen sein. Der Schwenkarm 320 kann an einem ersten Ende erste Haltegriffe 322 und an einem zweiten Ende zweite Haltegriffe 323 aufweisen. Am zweiten Ende des Schwenkarms (dem freien Ende des Schwenkarms) ist eine Seilwinde 340 mit einer Kurbel 341 vorgesehen. Ferner kann an dem zweiten Ende eine Rolleneinheit 355 und einen (mechanischen) Kraftmesser 360 vorgesehen sein. Ein Halteseil 400 kann dann durch die Rolleneinheit 350 geführt werden und mittels der Winde 340 aufgewickelt werden.

Anhand des Kraftmessers kann die Belastung auf das Halteseil 400 überprüft werden. Falls die Belastung zu groß wird, kann das Bedienpersonal das Halteseil nachlassen. Das Seil wird z. B. 2 - 3 Mal um die Winde gelegt. Durch Nachlassen bzw. locker lassen des Seils kann das Seil nachgelassen werden. Ein Dichtholen des Seils kann durch die Kurbel erfolgen.

Ein Winkel α zwischen der Basiseinheit 310 und dem Schwenkarm 320 ist abhängig von der Stellung der Halteeinheit 330.

Gemäß einem Aspekt der vorliegenden Erfindung weist der Schwenkarm 320 einen ersten Abschnitt 320a am ersten Ende, einen zweiten Abschnitt 320b am zweiten Ende (dem freien Ende) und einen dritten Abschnitt 320c zwischen dem ersten und zweiten Abschnitt auf. Der erste Abschnitt 320a ist mit einer Schwenkachse 301 gekoppelt.

Wie in Fig. 4D dargestellt, ist sowohl die Windeneinheit 340 als auch die Rolleneinheit 350 am freien Ende (zweiter Abschnitt 320) vorgesehen. Ein Halteseil wird durch die erste und zweite Rolle 351, 352 eingeführt und mittels der Winde 340 aufgewickelt.

Gemäß einem Aspekt der vorliegenden Erfindung liegen der erste und zweite Abschnitt 320a, 320b des Schwenkarms 320 nicht auf einer Geraden. Vielmehr ist zwischen dem ersten Abschnitt 320a und dem zweiten Abschnitt 320b ein mittlerer Abschnitt 320c vorgesehen, welcher in einem Winkel zum ersten und zweiten Abschnitt vorgesehen ist. Der Winkel zwischen einer Unterseite des ersten Abschnitts 320a und einer Unterseite des mittleren Abschnitts 320c ist größer als 90° und kleiner als 180°. Ein Winkel zwischen einer Unterseite des zweiten Abschnitts 320b und einer Unterseite des Abschnitts 320c ist größer als 180°. Mit einer derartigen Ausgestaltung des Schwenkarms ist eine verbesserte Kraftverteilung möglich.

Bei der Montage eines Rotorblattes 108 oder eines Generators 200 wie in den Figuren 2 und 3 gezeigt wird ein Ende eines Halteseils 400 an der zu montierenden Komponente befestigt und ein anderes Ende 400 wird durch die beiden Rollen 351, 352 der Rolleneinheit 350 hindurchgeführt und mit der Winde 340 verbunden. Die Windeneinheit 300 kann wie in den Figuren 2 und 3 gezeigt auf einem Fundament 600 befestigt sein. Beim Hochziehen des Rotorblattes 108 oder des Generators 200 verändert sich der Winkel des Halteseiles 400 zum Boden und damit auch der Winkel α zwischen der Basiseinheit 310 und dem Schwenkarm 320. Dadurch, dass der Schwenkarm 320 frei nach oben schwenken kann, kann der Schwenkarm 320 dem veränderten Winkel α folgen. Durch die Halteeinheit 330, deren zweites Ende 332 in einem der Rastelemente 313 befestigt ist, wird sichergestellt, dass der Schwenkarm 320 auch bei Nachlassen der Spannung des Halteseils nicht nach unten fällt. Dadurch, dass die Rastelemente 313 nach oben hin offen sind, kann der Schwenkarm 320 sowie die Halteeinheit 330 eine Bewegung zum größeren Winkel hin ohne Einflussnahme durch ein Bedienpersonal vollziehen.

Gemäß einem Aspekt der Erfindung kann eine weitere Seiltrommel zur Aufnahme des überschüssigen Seils vorgesehen sein.

### Bezugszeichenliste

- 100: Windenergieanlage
- 102: Turm
- 104: Gondel
- 106: Rotor
- 108: Rotorblätter
- 110: Spinner
- 200: Generator
- 300: Seilwindeneinheit
- 301: Schwenkachse
- 310: Basiseinheit
- 311: Streben
- 312: Querstreben
- 313: Rasteinheiten
- 320: Schwenkarm
- 320a: erster Abschnitt
- 320b: zweiter Abschnitt
- 320c: dritter Abschnitt
- 322: erste Haltegriffe
- 323: zweite Haltegriffe
- 330: Halteeinheit
- 331: erstes Ende
- 332: zweites Ende
- 333: Schwenkachse
- 340: Seilwinde
- 341: Kurbel
- 350: Rolleneinheit
- 351: erste Rolle
- 352: zweite Rolle
- 355: Rolleneinheit
- 360: Kraftmesser
- 400: Halteseile
- 500: Kran
- 510: Kranhaken
- 520: Kranseil
- 600: Fundamenteinheit

## Patentansprüche

1. Seilwindeneinheit (300), mit
einer Basiseinheit (310),
einem Schwenkarm (320) und
einer Halteeinheit (330),
wobei der Schwenkarm (320) an seinem ersten Ende schwenkbar mit der Basiseinheit (310) gekoppelt ist,
wobei der Schwenkarm (320) an seinem zweiten freien Ende eine Seilwinde (340) zur Aufnahme eines Halteseils oder Führungsseils (400) aufweist,
**dadurch gekennzeichnet, dass** die Halteeinheit (330) schwenkbar mit dem Schwenkarm (320) gekoppelt ist,
wobei die Basiseinheit (310) eine Mehrzahl von Rasteinheiten (330) zur Aufnahme eines ersten Endes der Halteeinheit (330) aufweist.

2. Seilwindeneinheit (300) nach Anspruch 1, wobei
der Schwenkarm (320) einen ersten Abschnitt (320a), der mit der Basiseinheit (310) schwenkbar gekoppelt ist, einen zweiten Abschnitt (320b), an welchen die Seilwinde (340) gekoppelt ist, und einen dritten Abschnitt (320c) zwischen dem ersten und zweiten Abschnitt (320a, 320b) aufweist,
wobei ein Winkel zwischen einer Unterseite des ersten und dritten Abschnitts (320a, 320c) kleiner als 180° und größer als 90° ist,
wobei ein Winkel zwischen einer Unterseite des zweiten Abschnitts (320b) und der Unterseite des mittleren Abschnitts (320c) größer als 180° ist.

3. Seilwindeneinheit (300) nach Anspruch 1 oder 2, wobei
ein mechanischer Kraftmesser (360) zum Erfassen einer auf das Halteseil oder Fahrseil (400) wirkenden Kraft im Bereich des zweiten Abschnitts (320b) vorgesehen ist.

4. Verfahren zur Montage oder Demontage von Komponenten (108, 200) einer Windenergieanlage (100), mit den Schritten:
Befestigen mindestens eines Haltseils oder Führungsseils (400) an einer zu montierenden oder zu demontierenden Komponente (108, 200),
**gekennzeichnet durch** Befestigen des Halteseils oder des Führungsseils (400) an einer Seilwindeneinheit (300) nach einem der Ansprüche 1 bis 3, und
Anheben oder Absenken der zu montierenden oder zu demontierenden Komponente (108, 200) mittels eines Krans (500), wobei die zu montierende oder die zu demontierende Komponente (108, 200) mittels des Halteseils oder des Führungsseils (400) gehalten oder geführt wird.

5. Verfahren nach Anspruch 4, wobei
der Schwenkarm (320) einen ersten Abschnitt (320a), der mit der Basiseinheit (310) schwenkbar gekoppelt ist, einen zweiten Abschnitt (320b), an welchen die Seilwinde (340) gekoppelt ist, und einen dritten Abschnitt (320c) zwischen dem ersten und zweiten Abschnitt (320a, 320b) aufweist,
wobei ein Winkel zwischen einer Unterseite des ersten und dritten Abschnitts (320a, 320c) kleiner als 180° und größer als 90° ist,
wobei ein Winkel zwischen einer Unterseite des zweiten Abschnitts (320b) und der Unterseite des mittleren Abschnitts (320c) größer als 180° ist.

6. Verfahren nach Anspruch 4 oder 5, wobei
ein mechanischer Kraftmesser (360) zum Erfassen einer auf das Halteseil oder Fahrseil (400) wirkenden Kraft im Bereich des zweiten Abschnitts (320b) vorgesehen ist.

7. Verwendung einer Seilwindeneinheit (300) nach einem der Ansprüche 1 bis 3 zur Montage oder Demontage von Komponenten einer Windenergieanlage,
wobei die Seilwinde (340) ein Ende eines Halteseils oder Führungsseils (400) aufnimmt, um die zu montierende oder zu demontierende Komponente einer Windenergieanlage auszurichten.

## Claims

1. Rope winch unit (300), comprising
a base unit (310),
a pivot arm (320) and
a retaining unit (330),
wherein the pivot arm (320) is pivotably coupled to the base unit (310) at its first end, wherein the pivot arm (320) comprises a rope winch (340) for receiving a retaining rope or guide rope (400) at its second free end,
**characterized in that** the retaining unit (330) is pivotably coupled to the pivot arm (320),
wherein the base unit (310) comprises a plurality of latching units (330) for receiving a first end of the retaining unit (330).

2. Rope winch unit (300) according to Claim 1, wherein
the pivot arm (320) comprises a first portion (320a) that is pivotably coupled to the base unit (310), a second portion (320b) to which the rope winch (340) is coupled and a third portion (320c) between the first and second portion (320a, 320b),
wherein an angle between an underside of the first and third portion (320a, 320c) is less than 180° and greater than 90°,
wherein an angle between an underside of the second portion (320b) and the underside of the central portion (320c) is greater than 180°.

3. Rope winch unit (300) according to Claim 1 or 2, wherein
a mechanical dynamometer (360) is provided for detecting a force acting on the retaining rope or guide rope (400) in the region of the second portion (320b).

4. Method for mounting or dismounting components (108, 200) of a wind turbine (100) comprising the steps:
fastening at least one retaining rope or guide rope (400) on a component (108, 200) to be mounted or dismounted,
**characterized by** fastening the retaining rope or the guide rope (400) to a rope winch unit (300) according to any one of the claims 1 to 3, and
raising or lowering the component (108, 200) to be mounted or to be dismounted by means of a crane (500), wherein the component (108, 200) to be mounted or to be dismounted is held or guided by means of the retaining rope or the guide rope (400).

5. Method according to Claim 4, wherein
the pivot arm (320) comprises a first portion (320a) that is pivotably coupled to the base unit (310), a second portion (320b) to which the rope winch (340) is coupled and a third portion (320c) between the first and second portion (320a, 320b),
wherein an angle between an underside of the first and third portion (320a, 320c) is less than 180° and greater than 90°,
wherein an angle between an underside of the second portion (320b) and the underside of the central portion (320c) is greater than 180°.

6. Method according to Claim 4 or 5, wherein
a mechanical dynamometer (360) is provided for detecting a force acting on the retaining rope or guide rope (400) in the region of the second portion (320b).

7. Use of a rope winch unit (300) according to any one of the claims 1 to 3 for mounting or dismounting components of a wind turbine,
wherein the rope winch (340) receives one end of a retaining rope or guide rope (400) in order to align the component of the wind turbine to be mounted or to be dismounted.

## Revendications

1. Unité de treuil à câble (300), avec
une unité de base (310),
un bras pivotant (320) et
une unité de retenue (330),
dans laquelle le bras pivotant (320) est couplé, de manière à pouvoir pivoter, à l'unité de base (310) sur sa première extrémité,
dans laquelle le bras pivotant (320) présente, sur sa deuxième extrémité libre, un treuil à câble (340) pour recevoir un câble de retenue ou un câble de guidage (400),
**caractérisée en ce que** l'unité de retenue (330) est couplée, de manière à pouvoir pivoter, au bras pivotant (320),
dans laquelle l'unité de base (310) présente une multitude d'unités d'enclenchement (330) pour recevoir une première extrémité de l'unité de retenue (330).

2. Unité de treuil à câble (300) selon la revendication 1, dans laquelle
le bras pivotant (320) présente une première section (320a), qui est couplée, de manière à pouvoir pivoter, à l'unité de base (310), une deuxième section (320b), à laquelle le treuil à câble (340) est couplé, et une troisième section (320c) entre la première et la deuxième section (320a, 320b),
dans laquelle un angle entre une face inférieure de la première et de la troisième section (320a, 320c) est inférieur à 180° et est supérieur à 90°,
dans laquelle un angle entre une face inférieure de la deuxième section (320b) et la face inférieure de la section centrale (320c) est supérieur à 180°.

3. Unité de treuil à câble (300) selon la revendication 1 ou 2, dans laquelle
un capteur de force mécanique (360) est prévu pour détecter une force agissant sur le câble de retenue ou le câble de guidage (400) dans la zone de la deuxième section (320b).

4. Procédé de montage ou de démontage de composants (108, 200) d'une éolienne (100), avec les étapes :
de fixation d'au moins un câble de retenue ou de guidage (400) sur un composant (108, 200) à monter ou à démonter, **caractérisé par**
de fixation du câble de retenue ou du câble de guidage (400) sur une unité de treuil à câble (300) selon l'une quelconque des revendications 1 à 3, et
de levage ou d'abaissement du composant (108, 200) à monter ou à démonter au moyen d'une grue (500), dans lequel le composant (108, 200) à monter ou à démonter est retenu ou guidé au moyen du câble de retenue ou du câble de guidage (400).

5. Procédé selon la revendication 4, dans lequel
le bras pivotant (320) présente une première section (320a), qui est couplée de manière à pouvoir pivoter à l'unité de base (310), une deuxième section (320b), à laquelle le treuil à câble (340) est couplé, et une troisième section (320c) entre la première et la deuxième section (320a, 320b),
dans lequel un angle entre une face inférieure de la première et de la troisième section (320a, 320c) est inférieur à 180° et est supérieur à 90°,
dans lequel un angle entre une face inférieure de la deuxième section (320b) et la face inférieure de la section centrale (320c) est supérieur à 180°.

6. Procédé selon la revendication 4 ou 5, dans lequel
un capteur de force mécanique (360) est prévu pour détecter une force agissant sur le câble de retenue ou le câble de guidage (400) dans la zone de la deuxième section (320b).

7. Utilisation d'une unité de treuil à câble (300) selon l'une quelconque des revendications 1 à 3 pour monter ou démonter des composants d'une éolienne,
dans laquelle le treuil à câble (340) reçoit une extrémité d'un câble de retenue ou d'un câble de guidage (400) pour orienter le composant à monter ou à démonter d'une éolienne.
